# EUROPEAN PATENT APPLICATION

(11) **EP 4 471 450 A1**
(43) Date of publication of application: **04.12.2024**
(21) Application number: 24177945.3
(22) Date of filing: 24.05.2024
(51) Int. Cl.: G01S 7/292, G01S 7/35, G01S 13/72, G01S 13/931, G01S 13/18, G01S 13/86, G01S 7/41

(54) **RADAR SNR DISTRIBUTION RETURN DESCRIPTOR FOR USE IN OBJECT DETECTION AND GROUND CLUTTER REMOVAL**

(30) Priority: 30.05.2023 US 202318203220
(71) Applicant: Trimble Inc., Westminster, CO 80021 (US)
(72) Inventor: GREBE, Christopher, Westminster, 80021 (US)
(74) Representative: AWA Sweden AB

(57) **Abstract**

Disclosed are techniques for distinguishing potential obstacles from ground clutter using the signal-to-noise-ratio (SNR). A first set of points or group of points with a high SNR, at least partially surrounded by points with a low SNR, is classified as a potential obstacle. A second set of points or groups of points with a low SNR is classified as ground clutter.

## Description

### BACKGROUND OF THE INVENTION

An autonomous mobile robotic platform can utilize systems that provide terrain and feature analysis of ground-based information surrounding the robot. This information can facilitate the robot's navigation system to make decisions about where the robot can and cannot go. The robot can thus avoid obstacles, which may be humans, other robots or vehicles, or stationary obstructions. As used herein, "robot" includes driver-assisted or autonomous vehicles/machines.

Radar performs better than Light Detection and Ranging (LIDAR) in bad weather, and radar obstacle detection chips for use in vehicles are commercially available and less expensive than Lidar systems. However, radar has lower resolution, is more susceptible to noise, and is susceptible to ground clutter. Radar sensors are desirable perception sensors in off road environments due to their inherent weather and obscurant robustness. However, off road environments exacerbate the presence of ground clutter in radar data. Discerning ground clutter from obstacles becomes increasingly difficult as ground terrain variation increases. Removing points based on hard thresholds to Signal-to-Noise-Ratio (SNR), Radar Cross Section (RCS), etc. will inevitably remove points of value and hinder the generalizability critical to a viable perception solution.

It would be desirable to use a radar system that can perform in terrain with a lot of ground clutter, such as a construction site, but one with improved accuracy. As such, new systems, methods, and other techniques are needed to address these and other issues.

Unless otherwise indicated herein, the materials described in this section of the Specification are not prior art to the claims in this application and are not admitted to be prior art by inclusion in this section.

### BRIEF SUMMARY OF THE INVENTION

A method and apparatus are provided for distinguishing potential obstacles from ground clutter using the signal-to-noise-ratio (SNR). Radar sensor data from a radar sensor is captured. A signal-to-noise-ratio (SNR) for a plurality of points in the radar sensor data is determined. The SNR for each of the plurality of points is compared to a threshold. A first set of points or groups of points with a SNR above the threshold and at least partially surrounded by points or groups of points with a SNR below the threshold is determined. The first set of points are classified as potential obstacles. A second set of points or groups of points with a SNR below the threshold is determined. The second set of points is classified as ground clutter.

In embodiments, the density of points around each point is determined. A range is determined for each of the points. The noise threshold is adjusted to be lower for longer range points. A density threshold is adjusted to be lower for longer ranges. The density threshold for a point is required to exceed the density threshold for the point to be classified as part of a potential obstacle.

In one embodiment, the points are grouped into clusters using a clustering algorithm, such as the DBSCAN clustering algorithm. The clusters are then identified as objects (potential obstacles) or noise (e.g., ground clutter) based on both density and SNR. In another embodiment, a machine learning algorithm is used to group points as potential obstacles.

This summary is not intended to identify key or essential features of the claimed subject matter, nor is it intended to be used in isolation to determine the scope of the claimed subject matter. The subject matter should be understood by reference to appropriate portions of the entire specification of this disclosure, any or all drawings, and each claim.

The foregoing, together with other features and examples, will be described in more detail below in the following specification, claims, and accompanying drawings.

The terms and expressions that have been employed are used as terms of description and not of limitation, and there is no intention in the use of such terms and expressions of excluding any equivalents of the features shown and described or portions thereof. It is recognized, however, that various modifications are possible within the scope of the systems and methods claimed. Thus, although the present system and methods have been specifically disclosed by examples and optional features, modification and variation of the concepts herein disclosed should be recognized by those skilled in the art, and that such modifications and variations are considered to be within the scope of the systems and methods as defined by the appended claims.

### BRIEF DESCRIPTION OF THE DRAWINGS

The accompanying drawings, which are included to provide a further understanding of the disclosure, are incorporated in and constitute a part of this specification, illustrate embodiments of the disclosure and together with the detailed description serve to explain the principles of the disclosure. No attempt is made to show structural details of the disclosure in more detail than may be necessary for a fundamental understanding of the disclosure and various ways in which it may be practiced.
FIG. 1 illustrates the placement of radar sensors on a vehicle with a soil compactor, according to embodiments.
FIG. 2 is a diagram illustrating the classification of point clusters as objects or ground clutter, according to embodiments.
FIG. 3 is a diagram illustrating the impact of range on classification of point clusters as objects or ground clutter, according to embodiments.
FIG. 4 is a diagram illustrating the classification of points as clusters based on density using the DBSCAN algorithm, according to embodiments.
FIG. 5 is a diagram illustrating the classification of points as potential obstacles based on both density and SNR, according to embodiments.
FIG. 6 is a diagram illustrating the classification of points as potential obstacles using SNR fed into a machine learning algorithm, according to embodiments.
FIG. 7 is block diagram illustrating the optional division of processing between the vehicle processor and the cloud, according to embodiments.
FIG. 8 illustrates a simplified computer system for performing the processes of embodiments, according to embodiments.

### DETAILED DESCRIPTION OF THE INVENTION

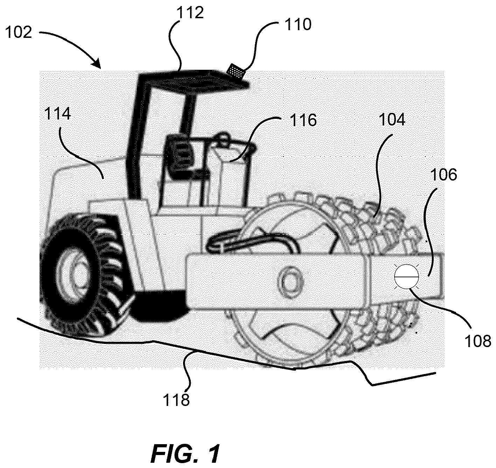

In embodiments, radar sensors are mounted on a moving machine as shown in FIG. 1. The points (e.g., pixels) of the radar return signal are classified by their SNR. The SNR distribution is leveraged to separate ground clutter from objects, which is particularly useful in off-road environments. The radar points can be labeled as part of ground clutter or an object with a descriptor (or feature if machine learning is used). As used herein, a descriptor is something (such as a word or characteristic feature) that serves to describe or identify. A feature (in the machine learning context) is data that is used as the input for machine learning models to make predictions.

In embodiments, clusters are identified by radar point density. Ground clutter has been found to be more random in distribution of SNR across a cluster than an object. Object clusters typically have higher SNR points concentrated toward the center of the cluster. Thus, the SNR distribution can be used, along with other features, to further refine the confidence of a cluster being identified as an object.

### Location of Radar on Vehicles

FIG. 1 shows an example vehicle 102 with a soil compactor attached thereto. The soil compactor includes a roller 104 attached to a frame 106 moving over uneven terrain 118. A radar sensor 108 is attached to the front of the frame 106. An optional LiDAR sensor 110 may be attached to a roof 112 of vehicle 102. Frame 106 and compactor 104 can move laterally with respect to cab 114. A console 116 includes a computer and other sensors, including an odometer and a potentiometer at the connection with frame 106 to detect its lateral movement. Other examples of vehicles with articulated segments can include a sprayer with boom arms, a harvester with a header, vehicles with a front or rear hitch, and the like. Embodiments of the invention are applicable to all of such vehicles, as well as other vehicles without articulated segments, such as cars, trucks, boats, aircraft, drones, etc.

Radar sensor 108 is mounted closer to the ground. Prior sensors were angled upward to enable detection of people and objects above the ground with minimal interference from ground detection (ground clutter). In one embodiment, the radar sensor position is a position in which the emitted radar lobes are parallel to the ground. The embodiments of the present invention set forth herein reduces/removes the need for upward radar sensor tilt. This is beneficial because upward tilt misses detecting small objects that should be detected and should potentially stop the vehicle. In one embodiment, the radar sensor is the SmartMicro Type 153 Radar sensor.

In one embodiment, an optional LiDAR sensor 110 of FIG. 1 is mounted high on the roof 112 to give it a wide and deep field of view (FOV), unobstructed by parts of the vehicle 102. In one embodiment, LiDAR sensor 110 provides a 180 or 360 degree view through the use of scanning mirrors, a rotating mount, or a solid-state mechanism. In one embodiment, the lidar sensor is the Cepton P60 Lidar sensor, or the Ouster OS0-128 Lidar sensor.

### Point Clouds

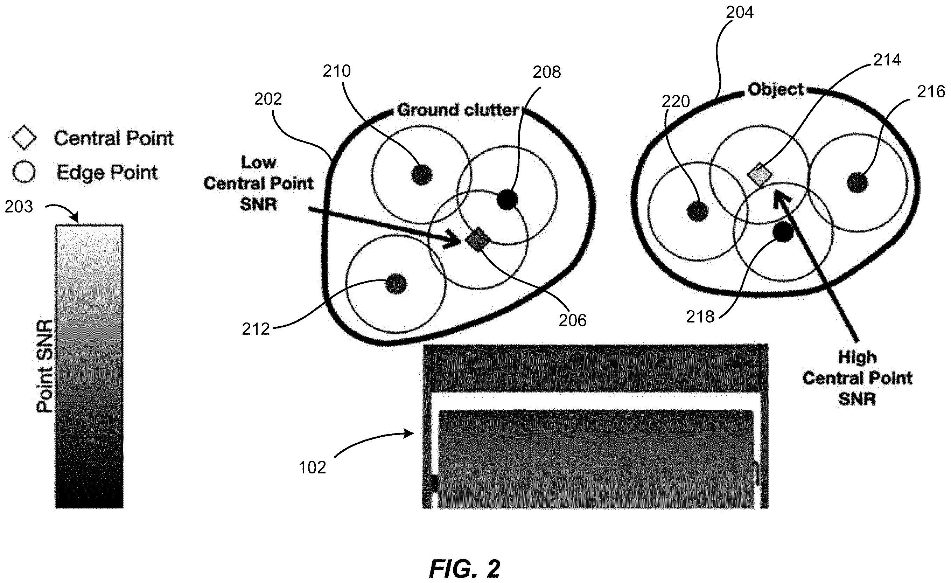

FIG. 2 is a diagram illustrating the classification of point clusters as objects or ground clutter, according to embodiments. FIG. 2 is a simplified example with just a few points. Two clusters of points in front of vehicle 102 are shown, as indicated by edge lines 202 and 204. The SNR for each point is determined. Graph 203 shows the variation of SNR for FIG. 2, with black corresponding to a low SNR and gray to a high SNR. A gray center point 214 of cluster 204 has a high SNR, while a black center point 206 of cluster 202 has a low SNR. The other points in cluster 204 are points 216, 218 and 220. These are high, like the center point 214. Cluster 204 does not have any points immediately around it. The combination of a cluster that exceeds the noise threshold with surrounding points (pixels) being absent, or having a low SNR, indicates a probable object and potential obstacle to vehicle 102. Thus, cluster 204 can be characterized as a probable object with an appropriate descriptor.

The other points in cluster 202 are points 208, 210 and 212. These points also have a low SNR, or a mix of low and high in a random pattern. Cluster 202 also does not have any points immediately around it. The combination of a cluster that does not exceed the noise threshold with surrounding points (pixels) being absent, or having a low SNR, indicates probable noise or ground clutter. Thus, vehicle 102 can safely ignore cluster 102. These diagrams are simplistic to show the concept, and normally there would be many more points in and around the clusters.

### Range

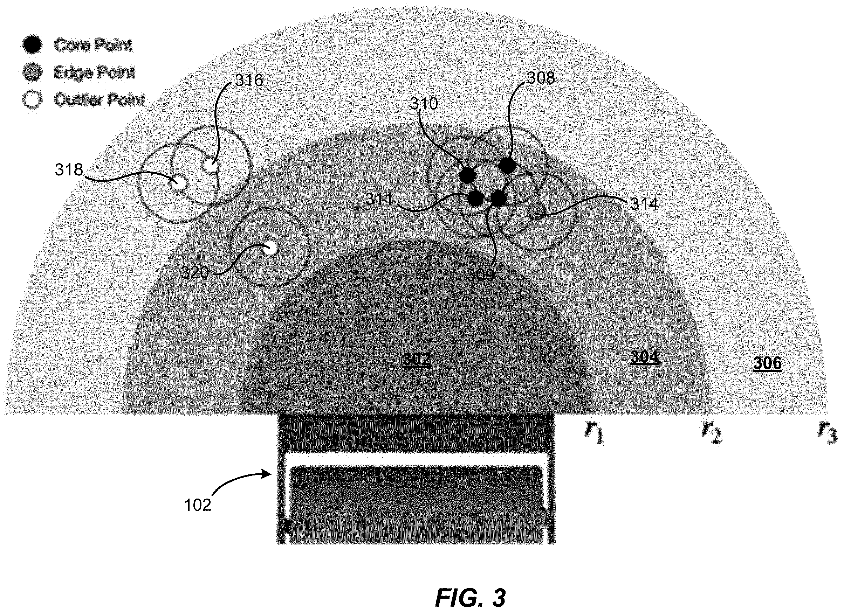

FIG. 3 is a diagram illustrating the impact of range on classification of point clusters as objects or ground clutter, according to embodiments. A first area/arc 302 is within a radius r₁ of the center front of vehicle 102. A second area 304 is between a distance r₁ and r₂ from the center front of vehicle 102. A third area 306 is between a distance r₂ and r₃ from the center front of vehicle 102.

A first cluster is made up of points 308, 309, 310 and 311, all shown in black as core points. The circles around the points illustrate the cluster point radius around a point within which another point must be located to be considered part of a cluster core. In addition to being within that cluster point radius, there must be a cluster threshold number of points within that cluster point radius. A common cluster threshold number of points is 3 points, giving a total of 4 points including the point at the center of the radius. The cluster threshold number of points within the cluster point radius is the density threshold. As can be seen, all four black points 308-311 have 3 additional points within their radius, and thus meet the density threshold for a cluster core. A gray point 314 only has one additional point 309 within its cluster point radius, and thus is defined as an edge point indicating an edge of the cluster, since that one point 309 within its cluster point radius has 3 points within its cluster point radius.

A further criteria according to embodiments is the SNR. If points 308-311 all have high SNR, then they would meet both the density and a first SNR criteria for an object, which can be a potential obstacle for vehicle 102. A second SNR criteria is that the cluster meets a cumulative point threshold using additional surrounding points with a decreasing SNR relative to the central points such as point 314 in FIG. 3. The cumulative point threshold and the distance parameter between points to consider them neighbors both depend on range. Increased range results in a combination of a lower cumulative point threshold and increased range parameter (distance between neighboring points can be larger). Quantifying the number of points depends on the sensor model and the sliding window time (sliding window accumulates points over the past X number of milliseconds so that point build up on objects can be seen). For example, compared to SmartMicro 153, SmartMicro 169 produces more points, and uses a larger sliding window time that will allow more points to accumulate, thus requiring a higher point threshold. With one specific sensor model and configuration, 10 points could be required for an object at a 10m range with a specific SNR profile and 5 points could be required at a 30m range for the same object.

An alternate embodiment is a second SNR criteria that the cluster be at least partially surrounded by points with a lower SNR, or at least a mix of high and low. There are no other points shown immediately around cluster of points 308-311, and thus this criterion is met. The closest points are points 316, 318 and 320, which, if they have low SNR, are not considered part of the object due to their SNR, in addition to their density.

White points 316, 318 and 320 are outliers. These may fail both the density and SNR criteria for an object, and thus are considered noise or ground clutter. Point 320 is in the same range 304 as cluster 308-311, and thus its cluster point radius is the same size. There are no other points within the cluster point radius, and thus it does not meet the density requirement for a cluster. It also may not meet the SNR requirement for an object. Similarly, points 316 and 318 have only a single point within their cluster point radius, and thus do not meet the density threshold for a cluster. These points are farther away, in range 306. Thus, the cluster point radius can be slightly larger to account for the longer distance and thus wider apparent separation of points that would appear closer for closer points. However, in this example, even with a larger cluster point radius, there still are not 3 other points within that radius. In addition, at a longer range the SNR of objects will be smaller, and thus an SNR threshold is adjusted for this longer range.

### Classical classification embodiment

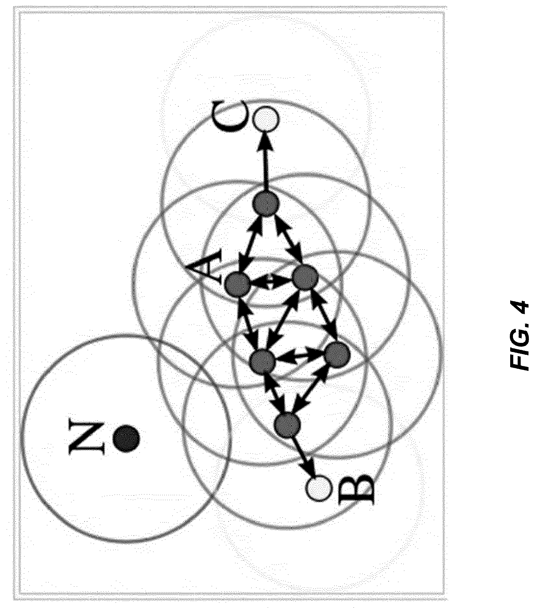

FIG. 4 is a diagram illustrating the classification of points as clusters based on density using the DBSCAN algorithm, according to embodiments. The DBSCAN algorithm is described in Ester, Martin, et al. "A density-based algorithm for discovering clusters in large spatial databases with noise." kdd. Vol. 96. No. 34. 1996. FIG. 4 illustrates the basic concept. The cluster of points A all have at least 3 other points within a defined radius, and thus form the core of a cluster. Points B and C do not have 3 other points in such radius, but have one point, and that one point is part of the core cluster. Thus, points B and C are considered edge points. Point N does not have any other points within such radius, and thus is an outlier. Thus, in radar applications, cluster A is considered a potential object, with points B and C being at the edges of the object, defining its borders.

In one embodiment, the DBSCAN algorithm is implemented as follows:
1. A first function determines if two points are neighbors. A simple implementation of this function entails using Euclidean distance as the metric to determine if two points are neighbors. Other variables may be incorporated, such as by using the radar measurement range to change the distance required for classification as a neighbor.
2. Query function. For each point, this function loops through all other points to find neighbors using the first function above, distance. The points are classified. In the DBSCAN algorithm, they are either "core points," "edge points," or "outlier points," as described in more detail below and the referenced article above. In sum, a core point has a certain number of other points in a defined close proximity forming a cluster. Edge points are at the edge of the cluster, and outliers are clearly outside the cluster. The Neighbors are returned as "possible observations." A "possible observation" is a radar reflection that is possible part of an object. Embodiments include varying, based on a point's SNR, the number neighboring points required for a point to be considered a core point. The lower the SNR, the larger the number of surrounding points required to be considered a core point.
3. Expand cluster. The clusters are then identified or grown starting from identified core points, until points meeting the "edge point" definition are reached.
4. Main loop. The process loops through all the points, calling an "expand_cluster" function on all points until all points have been assigned a cluster ID or identified as outliers.

In one embodiment, an observation threshold is not just a number of points, but is also dependent on the point distribution. For example, a SNR that follows a relatively smooth reduction pattern as you move further from the cluster center indicates an object.

### General Process

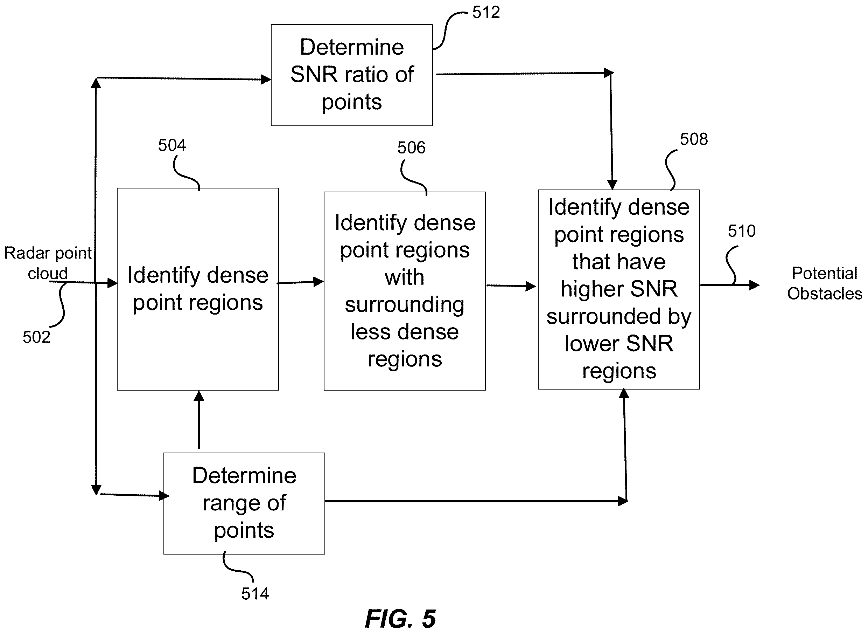

FIG. 5 is a diagram illustrating the classification of points as potential obstacles based on both density and SNR, according to embodiments. A radar point cloud 502 is obtained from a radar sensor. Dense point regions are identified (504). A subset of dense point regions with surrounding less dense regions are identified (506). The SNR of each point is determined (512). The subset from step or module 506 is examined to determine which group of points also have a higher central SNR and are surrounded by increasingly lower SNR points that together additionally meet an overall point threshold. Less dense regions separate groups of points. Clusters of points which meet both the density and SNR criteria are identified as potential obstacles (510). The range of each point is also determined (514) and used to vary both the required density in step 504 and the SNR threshold in step 508. At longer ranges, less density is required to be considered an object, and a lower SNR is required. These determinations can be performed using a variety of algorithms, such as the DBSCAN algorithm described above, or machine learning or AI algorithms as described below.

### Machine Learning Embodiment

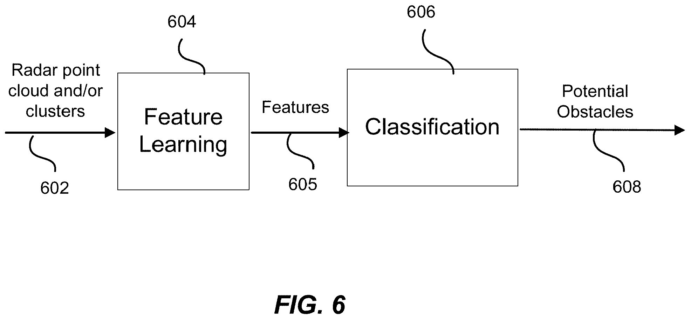

FIG. 6 is a diagram illustrating the classification of points as potential obstacles using SNR fed into a machine learning algorithm, according to embodiments. A radar point cloud and/or clusters 602 are provided to trained machine learning modules. A first module 604 is trained to detect features. In this case, the features would be clusters of radar points that are objects and potential obstacles. During training, this module is fed clusters that correspond to different classifications including types of objects and ones that correspond to ground clutter or noise. Each point is provided with its density information, range, and SNR (and optionally other data). The module learns to identify features 605 of each provided classification. These features include density and SNR distribution. The identified features 605 are then provided to a classification module 606, with the output being the classification 608 as an object (potential obstacle), ground clutter, noise, etc. It may also classify types of objects, such as a person, animal, wall, tree, etc. The module then learns that high SNR ratio points surrounded by low SNR ratio points correspond to objects.

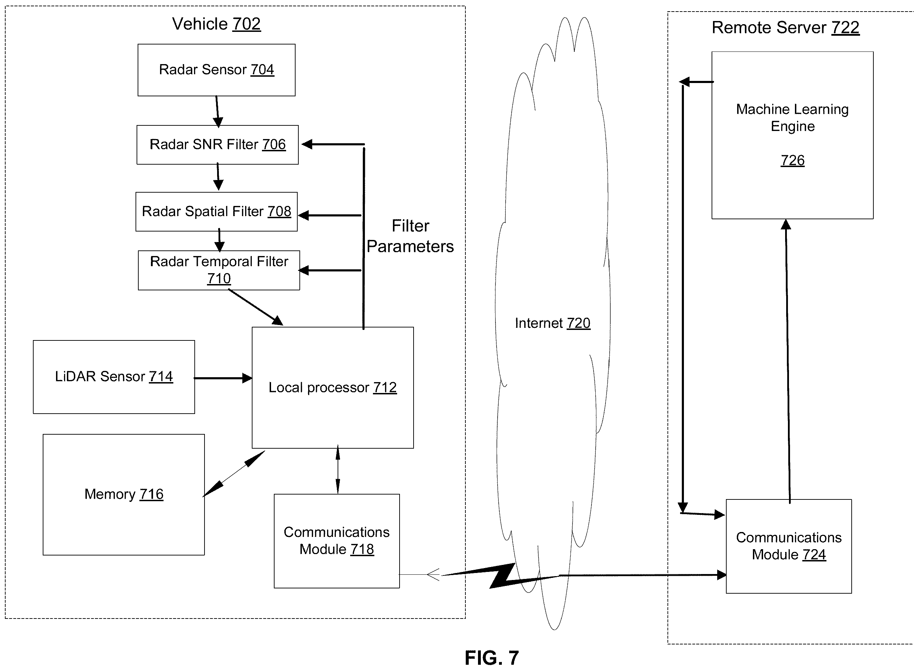

FIG. 7 is block diagram illustrating the optional division of processing between the vehicle processor and the cloud, according to embodiments. In one embodiment, all the processing is done in the vehicle. In another embodiment, some of the processing is done in the clouds, such as training a machine learning module with radar point cloud data from multiple vehicles. A vehicle 702 has at least one radar sensor 704. The radar sensor is typically on a chip that processes radar sensor data with an SNR filter 706, a radar spatial filter 708 and a radar temporal filter 710, as described above. Alternately, one or more of the filter functions could be performed in a local processor. A local processor 712 receives this data, optionally along with ground truth data from a lidar sensor 714. Processor 1312 uses memory 1316, which can be several memories, for the programs and data.

A communications module 718 provides the data over the internet 720 and/or other networks, to a remote server 722. Remote server 722 receives the data with its own communications module 724, and processes the data through server modules such as a machine learning engine 726. A trained machine learning module can then be downloaded to vehicle 702 through communications module 724, which provides them to local processor 712 to analyze radar data provided through the radar sensor and filters. In alternate embodiments, some or all of the remote server processes could be performed by the local processor in the vehicle.

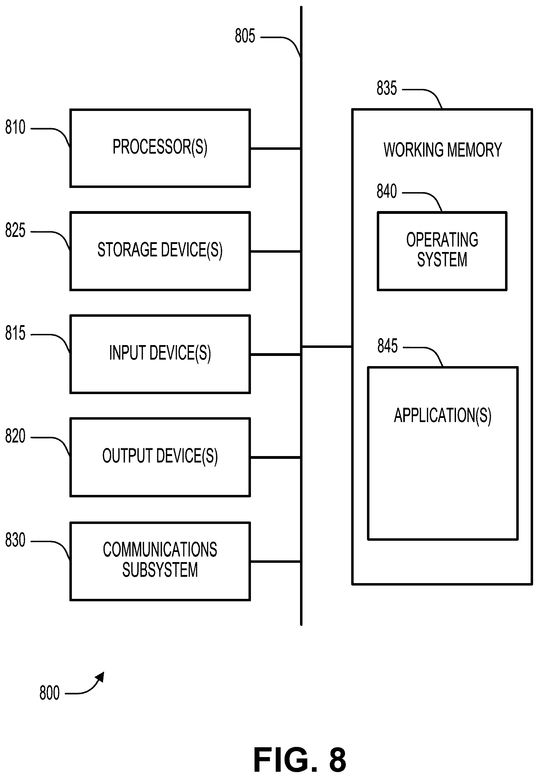

FIG. 8 illustrates a simplified computer system 800, in accordance with some embodiments of the present disclosure. FIG. 8 provides a schematic illustration of one embodiment of computer system 800 that can perform some or all of the steps of the methods provided by various embodiments. It should be noted that FIG. 8 is meant only to provide a generalized illustration of various components, any or all of which may be utilized as appropriate. FIG. 8, therefore, broadly illustrates how individual system elements may be implemented in a relatively separated or more integrated manner.

Computer system 800 is shown comprising hardware elements that can be electrically coupled via a bus 805, or may otherwise be in communication, as appropriate. The hardware elements may include one or more processors 810, including without limitation one or more general-purpose processors and/or one or more special-purpose processors such as digital signal processing chips, graphics acceleration processors, and/or the like; one or more input devices 815, which can include, without limitation a mouse, a keyboard, a camera, and/or the like; and one or more output devices 820, which can include, without limitation a display device, a printer, and/or the like.

Computer system 800 may further include and/or be in communication with one or more non-transitory storage devices 825, which can comprise, without limitation, local and/or network accessible storage, and/or can include, without limitation, a disk drive, a drive array, an optical storage device, a solid-state storage device, such as a random access memory ("RAM"), and/or a read-only memory ("ROM"), which can be programmable, flash-updateable, and/or the like. Such storage devices may be configured to implement any appropriate data stores, including without limitation, various file systems, database structures, and/or the like.

Computer system 800 might also include a communications subsystem 830, which can include, without limitation a modem, a network card (wireless or wired), an infrared communication device, a wireless communication device, and/or a chipset such as a Bluetooth^{®} device, an 802.11 device, a Wi-Fi device, a WiMax device, cellular communication facilities, etc., and/or the like. The communications subsystem 830 may include one or more input and/or output communication interfaces to permit data to be exchanged with a network such as the network described below to name one example, to other computer systems, and/or any other devices described herein. Depending on the desired functionality and/or other implementation concerns, a portable electronic device or similar device may communicate image and/or other information via the communications subsystem 830. In other embodiments, a portable electronic device, e.g., the first electronic device, may be incorporated into computer system 800, e.g., an electronic device as an input device 815. In some embodiments, computer system 800 will further comprise a working memory 835, which can include a RAM or ROM device, as described above.

Computer system 800 also can include software elements, shown as being currently located within the working memory 835, including an operating system 840, device drivers, executable libraries, and/or other code, such as one or more application programs 845, which may comprise computer programs provided by various embodiments, and/or may be designed to implement methods, and/or configure systems, provided by other embodiments, as described herein. Merely by way of example, one or more procedures described with respect to the methods discussed above can be implemented as code and/or instructions executable by a computer and/or a processor within a computer; in an aspect, then, such code and/or instructions can be used to configure and/or adapt a general-purpose computer or other device to perform one or more operations in accordance with the described methods.

A set of these instructions and/or code may be stored on a non-transitory computer-readable storage medium, such as the storage device(s) 825 described above. In some cases, the storage medium might be incorporated within a computer system, such as computer system 800. In other embodiments, the storage medium might be separate from a computer system e.g., a removable medium, such as a compact disc, and/or provided in an installation package, such that the storage medium can be used to program, configure, and/or adapt a general purpose computer with the instructions/code stored thereon. These instructions might take the form of executable code, which is executable by computer system 800 and/or might take the form of source and/or installable code, which, upon compilation and/or installation on computer system 800 e.g., using any of a variety of generally available compilers, installation programs, compression/decompression utilities, etc., then takes the form of executable code.

It will be apparent to those skilled in the art that substantial variations may be made in accordance with specific requirements. For example, customized hardware might also be used, and/or particular elements might be implemented in hardware or software including portable software, such as applets, etc., or both. Further, connection to other computing devices such as network input/output devices may be employed.

As mentioned above, in one aspect, some embodiments may employ a computer system such as computer system 800 to perform methods in accordance with various embodiments of the technology. According to a set of embodiments, some or all of the procedures of such methods are performed by computer system 800 in response to processor 810 executing one or more sequences of one or more instructions, which might be incorporated into the operating system 840 and/or other code, such as an application program 845, contained in the working memory 835. Such instructions may be read into the working memory 835 from another computer-readable medium, such as one or more of the storage device(s) 825. Merely by way of example, execution of the sequences of instructions contained in the working memory 835 might cause the processor(s) 810 to perform one or more procedures of the methods described herein. Additionally, or alternatively, portions of the methods described herein may be executed through specialized hardware.

The terms "machine-readable medium" and "computer-readable medium," as used herein, refer to any medium that participates in providing data that causes a machine to operate in a specific fashion. In an embodiment implemented using computer system 800, various computer-readable media might be involved in providing instructions/code to processor(s) 810 for execution and/or might be used to store and/or carry such instructions/code. In many implementations, a computer-readable medium is a physical and/or tangible storage medium. Such a medium may take the form of a non-volatile media or volatile media. Non-volatile media include, for example, optical and/or magnetic disks, such as the storage device(s) 825. Volatile media include, without limitation, dynamic memory, such as the working memory 835.

Common forms of physical and/or tangible computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, EPROM, a FLASH-EPROM, any other memory chip or cartridge, or any other medium from which a computer can read instructions and/or code.

Various forms of computer-readable media may be involved in carrying one or more sequences of one or more instructions to the processor(s) 810 for execution. Merely by way of example, the instructions may initially be carried on a magnetic disk and/or optical disc of a remote computer. A remote computer might load the instructions into its dynamic memory and send the instructions as signals over a transmission medium to be received and/or executed by computer system 800.

The communications subsystem 830 and/or components thereof generally will receive signals, and the bus 805 then might carry the signals and/or the data, instructions, etc. carried by the signals to the working memory 835, from which the processor(s) 810 retrieves and executes the instructions. The instructions received by the working memory 835 may optionally be stored on a non-transitory storage device 825 either before or after execution by the processor(s) 810.

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of exemplary configurations including implementations. However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Also, configurations may be described as a process which is depicted as a schematic flowchart or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Having described several example configurations, various modifications, alternative constructions, and equivalents may be used without departing from the spirit of the disclosure. For example, the above elements may be components of a larger system, wherein other rules may take precedence over or otherwise modify the application of the technology. Also, a number of steps may be undertaken before, during, or after the above elements are considered. Accordingly, the above description does not bind the scope of the claims.

As used herein and in the appended claims, the singular forms "a", "an", and "the" include plural references unless the context clearly dictates otherwise. Thus, for example, reference to "a user" includes a plurality of such users, and reference to "the processor" includes reference to one or more processors and equivalents thereof known to those skilled in the art, and so forth.

Also, the words "comprise", "comprising", "contains", "containing", "include", "including", and "includes", when used in this specification and in the following claims, are intended to specify the presence of stated features, integers, components, or steps, but they do not preclude the presence or addition of one or more other features, integers, components, steps, acts, or groups.

Example embodiments are presented in the following itemized list.
1. A method comprising:
   capturing radar sensor data from a radar sensor;
   determining a signal-to-noise-ratio (SNR) for a plurality of points in the radar sensor data;
   comparing the SNR for each of the plurality of points to a noise threshold;
   determining a distribution of the SNR for the plurality of points; and
   classifying, based on an SNR distribution characteristic, each point as potential obstacles or as ground clutter or noise.
2. The method of item 1 further comprising:
   determining a first set of points or groups of points with a SNR above the noise threshold and at least partially surrounded by points or groups of points with a SNR below the noise threshold;
   classifying the first set of points as potential obstacles;
   determining a second set of points or groups of points with a SNR below the noise threshold; and
   classifying the second set of points as ground clutter or noise.
3. The method of item 1 further comprising:
   determining a range for each of the points; and
   adjusting the noise threshold to be lower for longer range points.
4. The method of item 1 further comprising:
   determining a density of points around each point; and
   requiring that the density of points around each point exceed a density threshold for the point to be classified as part of a potential obstacle.
5. The method of item 4 further comprising:
   determining a range for each of the points; and
   adjusting the density threshold to be lower for longer range points.
6. The method of item 1 further comprising:
   grouping the points into spatial clusters based on density using a DBSCAN clustering algorithm classifying points as core points, edge points or outlier points.
7. The method of item 6 wherein the lower the SNR, the larger the number of surrounding points that are required to be considered a core point.
8. The method of item 1 further comprising:
   grouping points as potential obstacles using a machine learning algorithm.
9. The method of item 1 wherein points are classified as a potential obstacle when they are part of a cluster of points that meets a cumulative point threshold with additional surrounding points having a decreasing SNR relative to the cluster of points.
10. The method of item 1 further comprising:
   determining a first set of points or groups of points with a SNR above the noise threshold and at least partially surrounded by points or groups of points with a SNR below the noise threshold;
   classifying the first set of points as potential obstacles;
   determining a second set of points or groups of points with a SNR below the noise threshold;
   classifying the second set of points as ground clutter or noise;
   determining a range for each of the points; and
   adjusting the noise threshold to be lower for longer range points.
11. A method comprising:
   capturing radar sensor data from a radar sensor;
   determining a signal-to-noise-ratio (SNR) for a plurality of points in the radar sensor data;
   comparing the SNR for each of the plurality of points to a noise threshold;
   determining a distribution of the SNR for the plurality of points;
   classifying, based on an SNR distribution characteristic, each point as potential obstacles or as ground clutter or noise;
   determining a first set of points or groups of points with a SNR above the noise threshold and at least partially surrounded by points or groups of points with a SNR below the noise threshold;
   classifying the first set of points as potential obstacles;
   determining a second set of points or groups of points with a SNR below the noise threshold;
   classifying the second set of points as ground clutter or noise;
   determining a range for each of the points;
   adjusting the noise threshold to be lower for longer range points;
   determining a density of points around each point;
   requiring that the density of points around each point exceed a density threshold for the point to be classified as part of a potential obstacle;
   determining a range for each of the points; and
   adjusting the density threshold to be lower for longer range points.
12. The method of item 11 further comprising:
   grouping the points into spatial clusters based on density using a DBSCAN clustering algorithm classifying points as core points, edge points or outlier points.
13. The method of item 12 wherein the lower the SNR, the larger the number of surrounding points that are required to be considered a core point.
14. The method of item 1 further comprising:
   grouping points as potential obstacles using a machine learning algorithm.
15. An apparatus comprising:
   a radar sensor mounted on a moving machine;
   a processor mounted on the moving machine;
   a memory mounted on the moving machine and containing non-transitory, computer readable media with instructions for:
      capturing radar sensor data from a radar sensor;
      determining a signal-to-noise-ratio (SNR) for a plurality of points in the radar sensor data;
      comparing the SNR for each of the plurality of points to a noise threshold;
      determining a distribution of the SNR for the plurality of points; and
      classifying, based on an SNR distribution characteristic, each point as potential obstacles or as ground clutter or noise.
16. The apparatus of item 15 wherein the non-transitory, computer readable media further includes instructions for:
   determining a first set of points or groups of points with a SNR above the noise threshold and at least partially surrounded by points or groups of points with a SNR below the noise threshold;
   classifying the first set of points as potential obstacles;
   determining a second set of points or groups of points with a SNR below the noise threshold; and
   classifying the second set of points as ground clutter or noise.
17. The apparatus of item 16 wherein the non-transitory, computer readable media further includes instructions for:
   determining a range for each of the points; and
   adjusting the noise threshold to be lower for longer range points.
18. The apparatus of item 15 wherein the non-transitory, computer readable media further includes instructions for:
   classifying points as a potential obstacle when they are part of a cluster of points that meets a cumulative point threshold with additional surrounding points having a decreasing SNR relative to the cluster of points.
19. The apparatus of item 18 wherein the cumulative point threshold decreases with increased range.
20. The apparatus of item 15 wherein the non-transitory, computer readable media further includes instructions for:
   determining a first set of points or groups of points with a SNR above the noise threshold and at least partially surrounded by points or groups of points with a SNR below the noise threshold;
   classifying the first set of points as potential obstacles;
   determining a second set of points or groups of points with a SNR below the noise threshold;
   classifying the second set of points as ground clutter or noise;
   determining a range for each of the points; and
   adjusting the noise threshold to be lower for longer range points.

## Claims

1. A method comprising:
capturing radar sensor data from a radar sensor;
determining a signal-to-noise-ratio (SNR) for a plurality of points in the radar sensor data;
comparing the SNR for each of the plurality of points to a noise threshold;
determining a distribution of the SNR for the plurality of points; and
classifying, based on an SNR distribution characteristic, each point as potential obstacles or as ground clutter or noise.

2. The method of claim 1 further comprising:
determining a first set of points or groups of points with a SNR above the noise threshold and at least partially surrounded by points or groups of points with a SNR below the noise threshold;
classifying the first set of points as potential obstacles;
determining a second set of points or groups of points with a SNR below the noise threshold; and
classifying the second set of points as ground clutter or noise.

3. The method of claim 1 or 2 further comprising:
determining a range for each of the points; and
adjusting the noise threshold to be lower for longer range points.

4. The method of any one of claims 1-3 further comprising:
determining a density of points around each point; and
requiring that the density of points around each point exceed a density threshold for the point to be classified as part of a potential obstacle.

5. The method of claim 4 further comprising:
determining a range for each of the points; and
adjusting the density threshold to be lower for longer range points.

6. The method of any one of claims 1-5 further comprising:
grouping the points into spatial clusters based on density using a DBSCAN clustering algorithm classifying points as core points, edge points or outlier points.

7. The method of claim 6 wherein the lower the SNR, the larger the number of surrounding points that are required to be considered a core point.

8. The method of any one of claims 1-7 further comprising:
grouping points as potential obstacles using a machine learning algorithm.

9. The method of any one of claims 1-8 wherein points are classified as a potential obstacle when they are part of a cluster of points that meets a cumulative point threshold with additional surrounding points having a decreasing SNR relative to the cluster of points.

10. The method of claim 9 wherein the cumulative point threshold decreases with increased range.

11. The method of any one of claims 1-10 further comprising:
determining a first set of points or groups of points with a SNR above the noise threshold and at least partially surrounded by points or groups of points with a SNR below the noise threshold;
classifying the first set of points as potential obstacles;
determining a second set of points or groups of points with a SNR below the noise threshold;
classifying the second set of points as ground clutter or noise;
determining a range for each of the points; and
adjusting the noise threshold to be lower for longer range points.

12. An apparatus comprising:
a radar sensor mounted on a moving machine;
a processor mounted on the moving machine;
a memory mounted on the moving machine and containing non-transitory, computer readable media with instructions for performing the method of any one of claims 1-11.
